# EUROPEAN PATENT APPLICATION

(11) **EP 4 195 141 A1**
(43) Date of publication of application: **14.06.2023**
(21) Application number: 21858160.1
(22) Date of filing: 02.08.2021
(51) Int. Cl.: G06Q 50/10

(54) **DOCUMENT GENERATION DEVICE, COMMUNICATION TERMINAL, RELAY TERMINAL, AND DOCUMENT GENERATION SYSTEM**

(30) Priority: 21.08.2020 JP 2020140194
(71) Applicant: TESNOLOGY Inc., Minato-ku Tokyo 107-0052 (JP)
(72) Inventor: KONDO, Katsuhiko, Tokyo 107-0052 (JP); P. JOHNSON III, Raymond, Tokyo 107-0052 (JP)
(74) Representative: Schröer, Gernot H.
(86) International application number: PCT/JP2021/028626
(87) International publication number: WO 2022/039012

(57) **Abstract**

A document generation device includes a receiving unit that receives data assigned a tag from a user terminal, a checking unit that refers to a first filter indicating tags necessary for a document in a predetermined format to determine whether or not the tag assigned to the received data meets the first filter, and a document generating unit that generates a document on the basis of data that meet the first filter.

## Description

### Field

The present invention relates to a technology for managing personal information.

### Background

There has recently been rapidly growing interest in "digital transformation (DX)". The digital transformation from a company's viewpoint means quickly capturing the needs of societies by using network technologies and flexibly transforming the company's business model to win in business.

Existing business systems employed in companies, however, are often over-optimized for individual operating divisions, and such legacy systems interfere with integrated utilization throughout the company. There is a sense of crisis that legacy systems may be a heavy burden to companies.

### Related Art List

### Patent Literatures

Patent Literature 1: JP 5360157 B

### Summary

### Technical Problem

Furthermore, dead ends and negative effects have been pointed out in companies' business strategies of collecting and hoarding vast amounts of information to provide unique services. Firstly, there are persistent backlashes against domination of information by giant digital platform providers. Digital platform providers collect a huge amount of personal information and exclusively use it to ensure their dominance. Individuals do not have power to individually negotiate with digital platform providers, and face a risk of unilateral changes in various rules relating to use of personal information. As such problems have been increasingly recognized, regulations on personal information use have been increasingly tightened in many countries. The EU General Data Protection Regulation (GDPR) is a representative example.

There is also a problem of energy. In the coming IoT age in which things are connected to the Internet, a huge power demand is expected for data management. The global annual power consumption is said to be 23,000 TWh in 2016, and would allegedly be more than ten times this amount in 2040. This is because the number of IoT devices will sharply increase and the operations of an enormous number of IoT devices premised on cloud computing will boost the power consumption of communication networks and data centers.

The present invention has been achieved on the basis of recognition of the aforementioned problems, and a chief object thereof is to propose a technology for managing data at the individuals' discretion.

### Solution to problem

A document generation device according to an embodiment of the present invention includes: a receiving unit that receives data from an external terminal, the data being assigned a tag; a checking unit that refers to a first filter indicating tags necessary for a document of a predetermined format to determine whether or not the tag assigned to the received data meets the first filter; and a document generating unit that generates a document on the basis of data that meet the first filter.

A communication terminal according to an embodiment of the present invention is connected with a document generation device.

The communication terminal includes a data storage unit that stores data and a tag in association with each other; a filter setting unit that sets a second filter indicating tags of data that can be externally transmitted in accordance with an input from a user; and a transmitting unit that refers to the second filter, selects data assigned a tag included in the second filter, and transmits the selected data to the document generation device,

When an insufficiency tag is set again in the second filter after notification of the insufficiency tag has been provided from the document generation device, the transmitting unit transmits data associated with the insufficiency tag to the document generation device.

A communication terminal according to another embodiment of the present invention includes: a receiving unit that receives data from each of a plurality of servers, each data being assigned a tag; and a data managing unit that saves the received data in association with the corresponding tags in an internal storage.

When first data assigned a first tag is received from a first server and the first data assigned a second tag is received from a second server, the data managing unit saves the first data in association with the first tag and the second tag.

A relay terminal according to an embodiment of the present invention is connected with a document generation device.

The relay terminal includes: an input unit that receives input of data from a user; a receiving unit that receives the first filter from the document generation device; a data acquiring unit that reads data from an information carrier held by a user, the data being assigned a tag; a checking unit that determines whether or not the tag assigned to the read data meets the first filter; and a transmitting unit that selects data meeting the first filter from the read data, and transmits the selected data to the document generation device.

When data associated with an insufficiency tag is input after notification of the insufficiency tag has been provided from the document generation device, the transmitting unit additionally transmits data associated with the insufficiency tag to the document generation device.

A document generation system according to an embodiment of the present invention includes a communication terminal and a document generation device.

The communication terminal includes: a data storage unit that stores data and a tag in association with each other; a filter setting unit that sets a second filter indicating tags of data that can be externally transmitted in accordance with an input from a user; and a transmitting unit that refers to the second filter, and when accessing the document generation device, selects data assigned a tag included in the second filter and transmits the selected data to the document generation device.

The document generation device includes: a receiving unit that receives data from the communication terminal, the data being assigned a tag; a checking unit that refers to a first filter indicating tags necessary for a document of a predetermined format to determine whether or not the tag assigned to the received data meets the first filter; a document generating unit that generates a document on the basis of data that meet the first filter; and a notifying unit that provides notification of an insufficiency tag when data associated with the tag is missing among the tags included in the first filter.

When an insufficiency tag is set again in the second filter after notification of the insufficiency tag has been provided from the document generation device, the transmitting unit of the communication terminal transmits data associated with the insufficiency tag to the document generation device.

When data associated with the insufficiency tag is received, the document generating unit of the document generation device generates a document including the received data.

### Advantageous Effects of Invention

According to the present invention, data management in which individuals have the initiative can be easily achieved.

### Brief Description of Drawings

FIG. 1 is a conceptual diagram for explaining cooperation of DI engines.
FIG. 2 is a conceptual diagram of data exchange among a public office, a company, and an individual.
FIG. 3 is a hardware configuration diagram of a document generation system.
FIG. 4 is a functional block diagram of a document generation device.
FIG. 5 is a functional block diagram of a user terminal.
FIG. 6 is a schematic diagram for explaining a method for consolidating personal information distributed in a plurality of file servers into a user terminal.
FIG. 7 is a schematic diagram for explaining output control using a second filter.
FIG. 8 illustrates an example of a format of an official document issued by a document generation device.
FIG. 9 is a data structure diagram of a document definition table.
FIG. 10 is a data structure diagram of issue history information.
FIG. 11 is a schematic diagram for explaining input control using a first filter.
FIG. 12 is a flowchart illustrating processes for issuing an official document by a document generation device according to the second embodiment.
FIG. 13 is a flowchart illustrating processes performed by a user terminal upon being informed of an insufficiency tag.
FIG. 14 is a screen diagram of a data supplement screen.
FIG. 15 is a sequence diagram illustrating processes for checking authenticity of an official document.
FIG. 16 is a hardware configuration diagram of a document generation system according to a third embodiment.
FIG. 17 is a functional block diagram of a relay terminal.
FIG. 18 is a schematic diagram for explaining input/output control of personal information in the third embodiment.
FIG. 19 is a flowchart illustrating processes for issuing an official document performed by the relay terminal according to the third embodiment.

### Description of Embodiments

In many cases, existing business systems are built for individual operating divisions or individual companies and optimized for specific tasks. Some of business systems that are giant and complicated and further have years of history of enduring long-term operation are difficult to radically repair or extend. For the same reason, it may be difficult to coordinate or integrate a plurality of business systems.

In addition, monopolization of so-called big data by a service providing system, which has become giant, of a single company has a risk of leading to a "surveillance society". Furthermore, gathering of data from a huge number of IoT devices into a group of servers (the cloud) increases the load and power consumption caused by communication. In particular, such problems are more likely to appear as the frequency of data collection is higher.

In an embodiment, digital intelligence engines (DI engines), each of which is associated with an individual, manage personal information. Instead of a service provider such as a company temporarily collecting personal information and users (service recipients) accessing a system of the service provider to receive services, users individually manage personal information by using DI engines, and a service provider obtains part of the personal information of each user, which is necessary for a service, to provide the service, details of which will be described later.

A DI engine is implemented by a chip (hereinafter referred to as a "DI chip") on which a micro-processor unit (MPU) is mounted. A DI chip includes an MPU, a volatile memory, and a non-volatile memory. The non-volatile memory stores personal information. A DI engine is, in a narrow sense, light-weight application software to be executed by the MPU of the DI chip and, in a broad sense, the functions achieved by the entire DI chip collectively. In the present embodiment, a DI engine means the latter unless otherwise stated.

A DI chip moves with a user. A DI chip is preferably embedded in a smartphone of a user, a card held by a user, or the like. Each DI engine preferably has a concierge function for the user in addition to data saving and outputting functions.

Each DI engine stores personal information of a user. The personal information is encrypted and saved in the DI engine, so that a server cannot freely collect the personal information. A server may store part of the personal information, but it is DI engines that can freely store personal information without restriction. For providing a service, the server obtains part of the personal information from a DI engine within a range permitted by the DI engine.

For example, a server S1 obtains a part X1 of personal information from a DI engine of a user P1. Another server S2 obtains a part X2 of personal information from the DI engine of the user P1. The personal information X1 and the personal information X2 may be completely different from each other or partially the same as each other. When the personal information X1 and the personal information X2 have a part XC in common, the server S1 and the server S2 may cooperate by using the common part XC as a key.

It is not service providers but users, which are service receivers, that have "data sovereignty". Because each DI engine outputs only personal information permitted by its user, privacy protection is facilitated. Each DI engine encrypts and saves personal information in the DI chip. Instead of temporarily gathering an infinitely enormous amount of personal information to provide services, a service provider obtains personal information from DI engines as necessary to provide services.

The application software for the DI chip is lightweighted and small-sized software. At present, the application software is assumed to have a size of about 0.2 MB or smaller. Even in the case where a DI engine has the concierge function, various processes are performed basically on the basis of the personal information stored in the DI engine, and the processing load is therefore small. Because the application software is not premised on cloud computing, the communication load is small and the power consumption can be reduced.

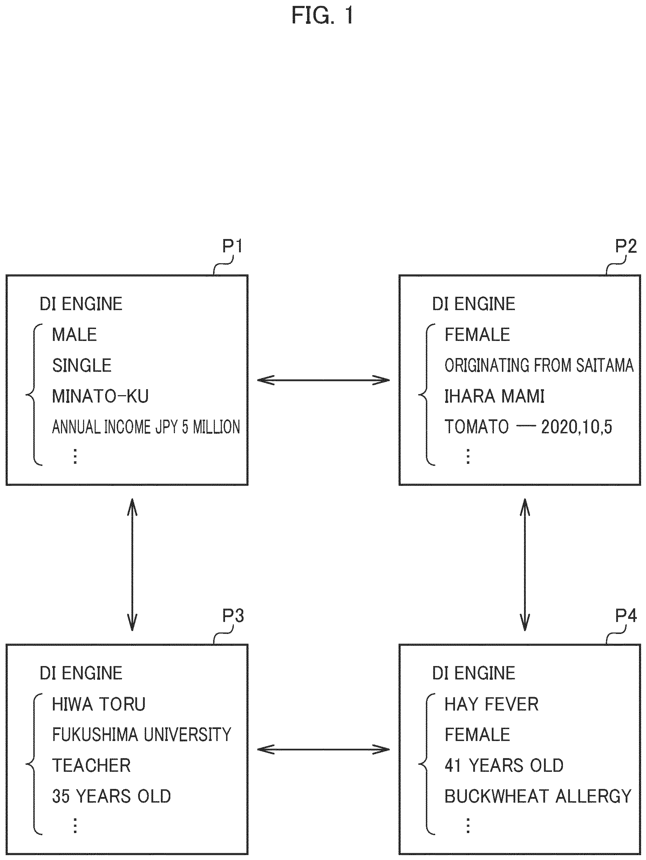

FIG. 1 is a conceptual diagram for explaining cooperation of DI engines.

Each DI engine collects personal data. A user may register his/her personal information by himself/herself in a DI engine, or a DI engine may collect personal information from an external device such as a smartphone. For example, a DI engine of a user P2 stores personal information indicating that the user P2 is "IHARA Mami" "being from Saitama", and ate a "tomato" on October 5, 2020. The user P2 takes a picture of a tomato with her smartphone before eating one. The DI engine may determine that the user P2 has eaten a tomato when the smartphone has taken a picture of a tomato. Alternatively, the user P2 may register his/her personal information in the DI engine by himself/herself. The registration of personal information in a DI engine may be conducted in any manner.

A plurality of DI engines mutually exchange personal information, which forms a personal information management system as a whole. For example, the user P1 may enable only part of personal information such as "male" and "single" to be output (disclosed). When the user P2 communicates with the user P1 (DI engine), the user P2 can know that the user P1 is a male who is single. In contrast, in a case where the user P1 sets annual income information of an "annual income of five million [JPY]" to be undisclosed, the annual income information is not provided to the user P2. The user P1 may disclose the annual income information to a user P3. Each user can set personal information to be disclosed depending on the user to communicate with.

Information is physically portable by DI engines. When the DI engine of the user P1 provides personal information to the DI engine of the user P2, the DI engine of the user P2 can make a suggestion suitable for the relationship between the user P1 and the user P2. For example, even when the user P1 and the user P2 meet each other for the first time, it is possible to suggest a topic the users have in common to talk about. In the case of the example described above, as the user P1 can know that the user P2 is from Saitama, the user P1 can initiate a conversation with a topic related to Saitama Prefecture. Because DI engines store personal information, the burdens of information management at data centers are also expected to decrease.

Each DI engine can narrow down personal information that may be provided to the outside from an enormous amount of personal information that the DI engine holds. Each DI engine can also narrow down the kinds of personal information to receive from personal information provided from others. Hereinafter, a conventional information management system in which data are collected into a server (center) and used will be referred to as a "central management type system", and an information management system in which DI engines store data and various processes are performed on the basis of data provided from the DI engines will be referred to as a "distributed management type system".

In the case of a central management type system, a company C1 that provides a service collects data into its database DB1 on its own. In the meantime, a company C2 that provides another service also collects data into its database DB2 in its own manner. Because the individual companies eagerly collect data in their own manners, many of the data stored in the database DB1 overlap with those in the database DB2. As a result, the same data are redundantly saved in a large number of databases. Because each company has its own database format, the databases lack scalability, which makes it difficult to make multiple databases cooperate.

In contrast, in a distributed management type system, databases cooperate on the basis of personal information obtained from DI engines, and companies therefore need not have databases with precise requirement definition. Companies receive necessary data from DI engines upon users' approval so as to provide services. It is therefore not necessary to always obtain a large amount of personal information.

For example, as illustrated in FIG. 1, various kinds of personal information are stored in DI engines. While the DI engine of the user P1 includes personal information relating to "annual income", the DI engine of the user P2 does not include "annual income" information. Each DI engine stores a variety of miscellaneous pairs of item (example: annual income) and data (example: five million [JPY]). In addition, a plurality of pieces of personal information may be associated with each other, such as "what the user ate: tomato" and "date: October 5, 2020" of the user P2. In a case where the user P1 wants know what the user P2 recently ate and the user P2 does not mind providing the information that "the user P2 ate tomato on October 5, 2020", the user P1 can know that the user P2 ate tomato on October 5, 2020. If the user P1 is a cook, the DI engine of the user P1 can determine that "the user P2 can eat tomato" or that "the user P2 may like tomato" on the basis of this information. As a result, the DI engine of the user P1 may determine that a tomato dish should be provided to the user P2.

With the information management system according to the present embodiment, overlapping storage of identical data into databases can be reduced by managing personal information by the DI engines. Furthermore, input errors and copying errors can be reduced when operators register personal information in databases. This is because a service provider obtains personal information from DI engines as necessary and processes the personal information as necessary. In addition, because the DI engines manage personal information, the risk of massive information leakage is low.

The conventional central management type system focuses on seizing a business opportunity by performing statistical processing on a large amount of personal information and giving a suggestion of an appropriate service to each individual. For example, when a user has purchased a product A, suggestion of a product B is given to the user on the basis of statistical information indicating that many of those who purchased the product A also purchased the product B.

In contrast, the distributed management type system according to the present embodiment is capable of providing a service that matches the values of each individual by analyzing personal information obtained from a DI engine. For example, when a user enters a store, its DI engine may suggest buying toilet paper if it knows that it has been a while since the user last bought toilet paper.

Furthermore, in the case of COVID-19 (Severe acute respiratory syndrome coronavirus 2: SARS-coV-2), having "a fever of 37.5 °C or higher for four or more days" is deemed to an indication for seeking medical attention. The normal temperature, however, varies from individual to individual, it may be preferable to set a reference value higher than 37.5 °C for users with high normal temperatures. Each DI engine may detect the body temperature of its user, and determine whether or not to seek medical attention on the basis of its own reference value.

DI engines are a key for information management in a data management system (DMS). In addition, a battery management system (BMS) manages power sources such as secondary batteries used by individual users. The DMS and the BMS manage personal information and energy. Furthermore, an energy management system (EMS) is built on the basis of information from a large number of DMSs and BMSs.

The MPU mounted in each DI engine is not required to have a very high throughput. The MPU may be a low-performance central processing unit (CPU) or a graphics processing unit (GPU). The MPU may alternatively be a field programmable gate array (GPFA).

A DI engine may be mounted in a database. In the conventional central management type system, rigorous requirement definition is required for design of a database for storing a large amount of data. As a result, many man-hours are required for integrating or modifying a database. In an application of the distributed management type system according to the present embodiment, a DI engine may be mounted in a database. First, data to be registered are input to the database (DI engine). The DI engine stores data directly into the database. When a request for obtaining data from the database is issued, the DI engine retrieves and outputs the requested data from the database. The DI engine adds weight to respective data depending on the frequency of use of the data. Specifically, the data retrieval performance can be increased by setting higher priority to data used more frequently, such as the name, for example. Such a control method increases both of the easiness of data input and the easiness of data acquisition by setting the importance (rating) of data depending on the actual use frequency in the database without performing requirement definition relating to the data structure.

In addition, DI engines may have functions for collecting words included in professional literature, social networking services (SNSs), news reports, and the like, and connecting the words with each other. For example, in a case where a word W2 appears near a word W1 (in the same sentence or in the same paragraph, for example), the word W1 and the word W2 are deemed to be associated with each other. Analysis of the strength of each association enables the connection of information to be visualized. The strength of each association may be determined by application of a known technology such as Word2Vec.

Furthermore, statistical analysis may be performed on limited personal information obtained from DI engines. For example, in a case where personal information indicating that "a user bought a product A on a rainy day" is repeatedly obtained, a finding that the product A sells well on a rainy day can be obtained. Alternatively, in a case where personal information indicating that the user P1 bought the product A on a past rainy day is present, a point-of-sale (POS) terminal at a store may recommend the product A when the user P1 visits the store on a rainy day. Similarly, in a case where information indicating that shoplifters often buy a product B first before shoplifting is obtained, it is possible to take a measure of keeping an eye primarily on a person who chose the product B.

There are many patients who forget to bring their medication notebooks. This poses a risk that a doctor cannot properly check side effects of medicines taken together when writing a prescription. A DI engine stores personal information indicating when and what medicine the user took or what prescription the user got. A doctor can give a prescription more appropriately even by obtaining information on the medication history from a DI engine. Furthermore, if personal information relating to the physical condition of a user can be obtained from a DI engine, it is also possible to change the type or the amount of medicine depending on the physical condition.

Different terms may be used for the same concept in different companies or different departments. For example, assume that a concept X is referred to as a term Y1 in a department E1 and that the same concept X is referred to as a term Y2 in another department E2. This may cause a discrepancy in communication between the department E1 and the department E2. In this case, a term group G1 associated with the term Y1 is extracted from the DI engine of a user in the department E1, and a term group G2 associated with the term Y2 from the DI engine of a user in the department E2. When the term group G1 and the term group G2 are similar to each other, the DI engines can recognize that the term Y1 and the term Y2 correspond to the same concept or concepts similar to each other.

In the first place, after management of personal information by DI engines, part of the personal information may be managed or backed up in small units such as families. For example, assume that the amount of information stored in a DI engine is represented by M1 and that the user thereof backs up part of personal information in an edge server operated by the family. The amount of personal information stored in the edge server may be about M1×0.1. According to such a control method, the user manages personal information with the DI engine and provides part of the personal information that can be shared in the family to the edge server.

Individual members of a family may provide part of their personal information to a car (a kind of edge server) owned by the family, so that the car can change the method of driving assistance depending on the user.

Furthermore, part of personal information may be provided as shared information to a community such as an apartment, a school, a workplace, or the like. In this case as well, personal information may not be provided unlimitedly, and personal information limited to information necessary and useful for the community, such as name, sex, address, and the like, may be provided. In this manner, when individuals manage their personal information with DI engines and provide personal information in a limited manner to their family, company, region, nation, or the like, the individuals can enjoy more convenience in the community while protecting their data management sovereignty.

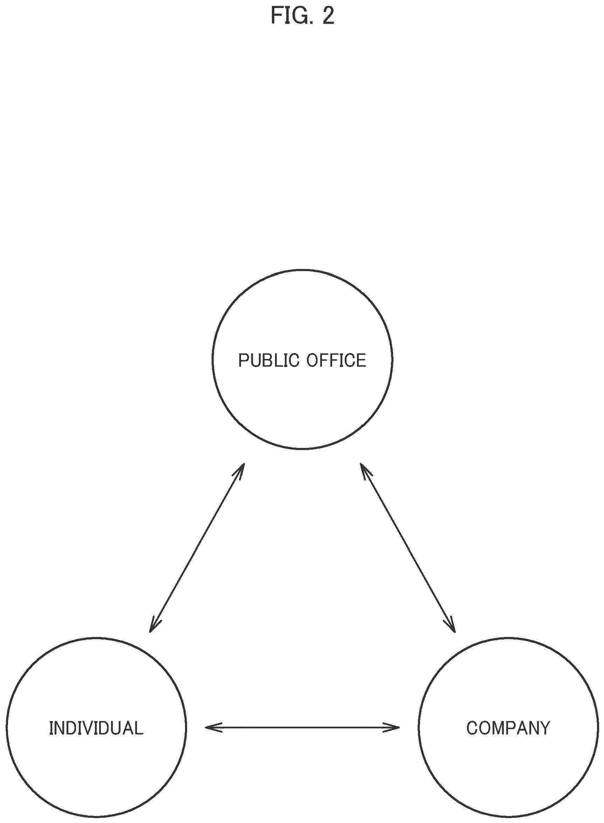

FIG. 2 is a conceptual diagram of data exchange among a public office, a company, and an individual.

For example, assume that a public office has a database DB1 of identity numbers and a database DB2 of a resident register network (a resident register network system). For integration of these two databases, a data group of the database DB1 and a data group of the database DB2 are input together in a DI engine of the public office. Assume here that "name", "address", "identity number", "age", and "occupation" are registered as personal information in association with each other in the database DB1. In addition, assume that "name", "address", "resident number" "sex", "birthplace" and "presence/absence of passport" are registered as personal information in association with each other in the database DB2. Because the two databases have "name" and "address" in common, the two databases can be integrated by using the two data items "name" and "address" as keys. For example, "identity number", "age", and "occupation" associated with two data of "name: SATO Ichiro" and "address: Kamigamo-motoyama, Kita-ku, Kyoto-shi, Kyoto" are identified, and "sex", "resident number", "birthplace" and "presence/absence of passport" associated with the same two data are identified. By associating "identity number", "age", "occupation", "sex", "resident number", "birthplace", and "presence/absence of passport" with "name: SATO Ichiro" and "address: Kamigamo-motoyama, Kita-ku, Kyoto-shi, Kyoto", the data for a user P1 (name: SATO Ichiro) in the database DB1 and the database DB2 can be integrated. The same applies to data for other users.

In addition, when the user P1 wants to obtain a copy of resident register from a municipal government, the user P1 provides personal information (example: name and address) necessary for obtaining the copy of resident register from his/her DI engine to the public office. Upon receiving the limited personal information, the public office may prepare the copy of resident register and transmit data of the copy of resident register to a mobile terminal of the user P1. The municipal government in charge of issuing copies of resident register need not manage data, such as work histories of users, other than those necessary for issuing copies of resident register. The municipal government may manage only formal data to be saved for services, and obtain other information necessary for each service from the DI engine of each resident as necessary.

In addition, a company may transmit product information or advertisements to customers on the basis of personal information provided from the DI engines of individual customers. In a case where a plurality of companies provide services to one customer, the companies can cooperate with each other via the DI engine. For example, when the user P1 provides such information as "I (P1) often drive a car", a car manufacturer may recommend a new car, and a municipal office may recommend a driving spot (driving route) in the city. When the user P1 expresses an interest in the recommended driving spot, an advertisement may be transmitted to the user P1 from a store near the driving spot. The store need not know the identity of the user P1.

Hereinafter, methods for consolidating and using personal information will be explained in first to third embodiments.

In the first embodiment, a method for consolidating personal information (data) distributed in a plurality of file servers into a user terminal (communication terminal) will be explained.

In the second embodiment, a method for issuing an official document by using personal information saved in a user terminal having functions for connecting to the Internet will be explained.

In the third embodiment, a method for issuing an official document by using personal information saved in a badge (information carrier) having no functions for connecting to the Internet will be explained.

Hereinafter, the first to third embodiments will be referred to as "the present embodiment" collectively or without being distinguished from each other.

### [First Embodiment]

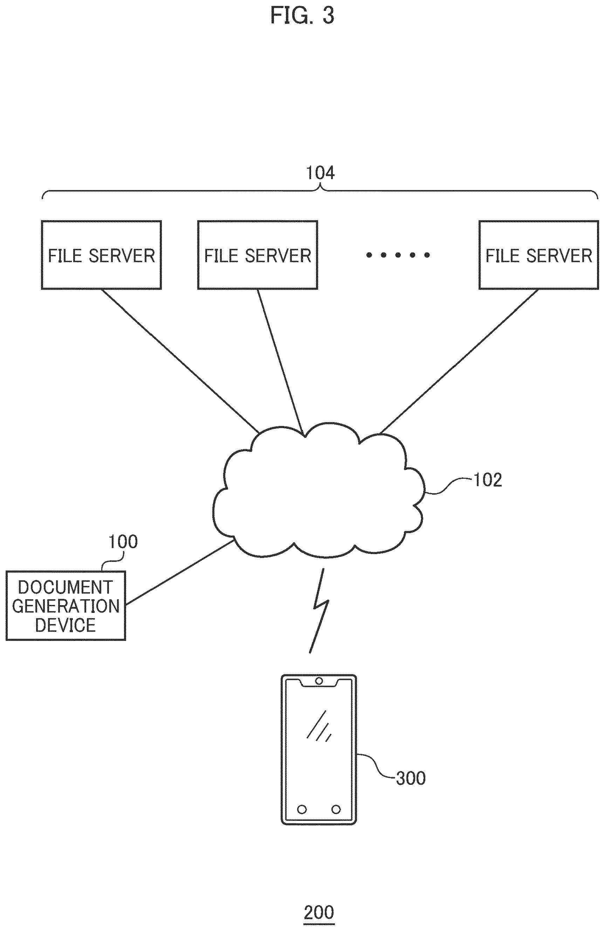

FIG. 3 is a hardware configuration diagram of a document generation system 200.

The document generation system 200 includes a document generation device 100, a plurality of file servers 104, and a user terminal 300. The document generation device 100, the file servers 104, and the user terminal 300 are connected via the Internet 102. The user terminal 300 is a communication terminal owned by a user, and may be a laptop personal computer (PC), a tablet PC, a smartphone, or the like. Alternatively, the user terminal 300 may be a so-called wearable terminal such as a smartwatch (wristwatch portable information terminal). In the description of the present embodiment, the user terminal 300 is assumed to be a smartphone. The user terminal 300 includes a DI engine. A DI chip may be mounted in the user terminal 300, or application software for implementing the functions of the DI engine may be installed in the user terminal 300.

The file servers 104 are databases operated by public agencies or the like, and manage personal information of users. The operators of the file servers 104 may be local governments, public offices, companies, educational institutions, financial institutions, and the like. Each agency manages personal information of users in its own format.

The document generation device 100 is a device for preparing and issuing official documents. The document generation device 100 in the present embodiment is operated by an administrative body. The document generation device 100 issues various official documents such as copies of resident register, library cards, copies of family register, driver's licenses, and certificates of registered matters.

A user registers his/her user ID and a password in the document generation device 100 in advance. The document generation device 100 verifies the identity of the user on the basis of the user ID and the password.

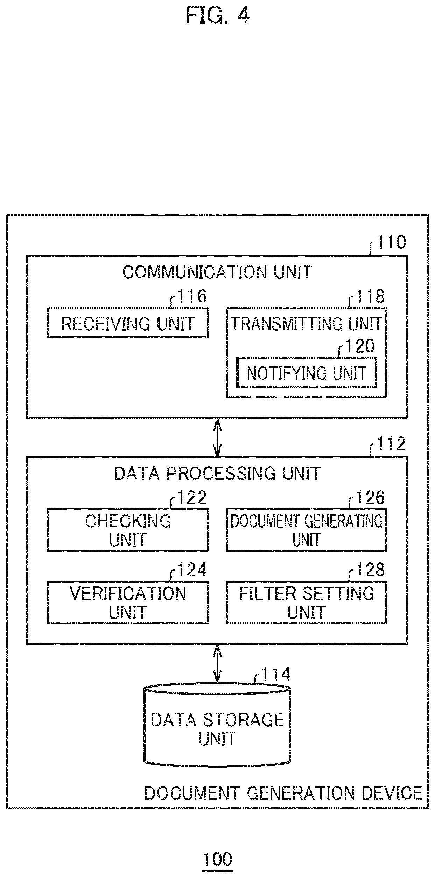

FIG. 4 is a functional block diagram of the document generation device 100.

Respective components of the document generation device 100 are implemented by hardware including arithmetic units such as central processing units (CPUs) and various coprocessors, storage devices such as memories and storages, and wire or wireless communication lines connecting the components, and software, stored in the storage devices, for supplying processing instructions to the arithmetic units. Computer programs may be constituted by device drivers, an Operating System, various application programs on upper layers thereof, and libraries providing common functions to the programs.

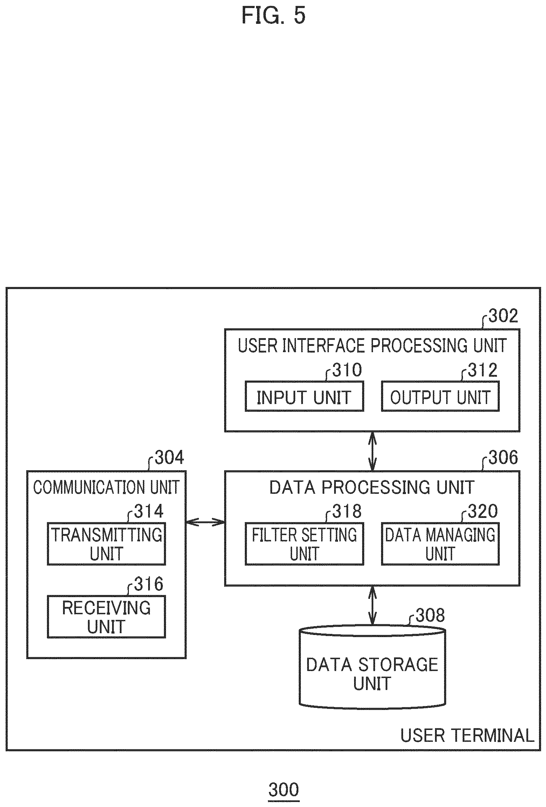

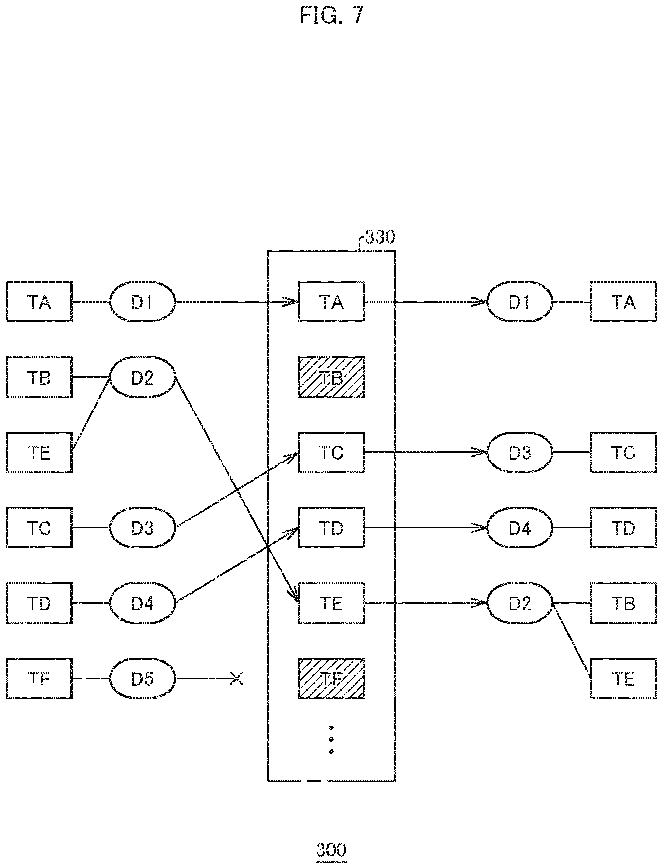

The blocks described below are not in units of hardware but are in units of functions. The same applies to a user terminal 300 in FIG. 5 and a relay terminal 400 in FIG. 7.

The document generation device 100 includes a communication unit 110, a data processing unit 112, and a data storage unit 114.

The communication unit 110 performs processing for communication with the user terminal 300, the relay terminal 400 (to be described later), and the file servers 104 via the Internet 102. The data storage unit 114 stores various information data. The data processing unit 112 performs various processes on the basis of data acquired by the communication unit 110 and data stored in the data storage unit 114. The data processing unit 112 also functions as an interface of the communication unit 110 and the data storage unit 114.

The communication unit 110 includes a transmitting unit 118 for transmitting various information data to external devices such as the user terminal 300, and a receiving unit 116 for receiving various information data from external devices.

The transmitting unit 118 includes a notifying unit 120 for notifying the user terminal 300 of missing data when there is a deficiency in data necessary for issuing a document.

The data processing unit 112 includes a checking unit 122, a verification unit 124, a document generating unit 126, and a filter setting unit 128.

The checking unit 122 determines whether or not to accept data received from an external device, such as the user terminal 300, on the basis of a first filter (to be described later). The verification unit 124 verifies the authenticity of an official document in response to an external inquiry. The document generating unit 126 generates an official document. The filter setting unit 128 sets the first filter depending on the type of the official document.

FIG. 5 is a functional block diagram of the user terminal 300.

The user terminal 300 includes a user interface processing unit 302, a communication unit 304, a data processing unit 306, and a data storage unit 308. The user interface processing unit 302 receives operations performed by the user, and performs processing relating to the user interface such as image display and audio output. The communication unit 304 performs processing for communication with the document generation device 100, the file servers 104 and the like via a wireless communication network. The data storage unit 308 stores various information data. The data processing unit 306 performs various processes on the basis of data acquired by the user interface processing unit 302 and the communication unit 304 and data stored in the data storage unit 308. The data processing unit 306 also functions as an interface of the user interface processing unit 302, the communication unit 304, and the data storage unit 308.

The user interface processing unit 302 includes an input unit 310 and an output unit 312. The input unit 310 receives various operations performed by the user. The output unit 312 outputs a variety of information in the form of images, audio, or the like.

The communication unit 304 includes a transmitting unit 314 for transmitting various information data to external devices such as the document generation device 100, and a receiving unit 316 for receiving various information data from external devices.

The data processing unit 306 includes a filter setting unit 318 and a data managing unit 320. The filter setting unit 318 sets a second filter (to be described later) to control the range of personal information permitted to be output among the personal information stored in the data storage unit 308. The data managing unit 320 manages personal information in the data storage unit 308. The data managing unit 320 also encrypts data to be saved in the data storage unit 308 and decrypts data read from the data storage unit 308.

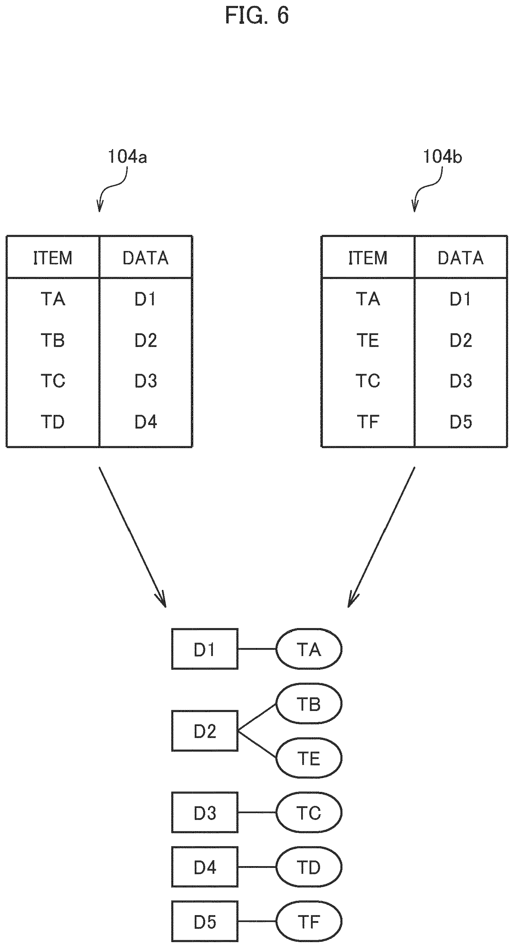

FIG. 6 is a schematic diagram for explaining a method for consolidating personal information distributed in a plurality of file servers 104 into the user terminal 300.

Some personal information of the user is managed by the user terminal 300 or the like, and other is managed by the file servers 104. The user can consolidate various personal information data distributed in the file servers 104 into the user terminal 300.

Assume that a file server 104a is operated by a public agency A and that a file server 104b is operated by another public agency B. Because the public agencies A and B individually operate the file server 104a and the file server 104b, respectively, in their own manners, there is no uniformity between the data management methods of the file servers 104a and 104b.

Personal information relating to a user PX in the file server 104a is managed as combination of "item" and "data". Hereinafter, "data" refers to part of personal information associated with an item. A collection of data will be referred to as "personal information".

In the file server 104a, four kinds of data are each managed with an item: "item TA: data D1", "item TB: data D2", "item TC: data D3", and "item TD: data D4". Examples of the items may include "name", "sex", "marital history", "birthplace", "address", and "financial asset".

In the file server 104b as well, personal information relating to the user PX is managed as combination of items and data. In the file server 104b, four kinds of data are each managed with an item: "item TA: data D1", "item TE: data D2", "item TC: data D3", and "item TF: data D5".

The user terminal 300 associates data with a tag to manage personal information. A "tag" is a concept defining an attribute of data. In the present embodiment, an "item name" corresponds to a tag. The transmitting unit 314 of the user terminal 300 transmits a data acquisition request (download request) to the file server 104a, and the receiving unit 316 thereof downloads personal information of the user PX from the file server 104a. For example, when "item TA: data D1" is acquired, the data managing unit 320 registers "data D1" in association with a "tag TA" into the data storage unit 308. Hereinafter, the data D1 to which the tag TA is assigned will be expressed to as "data D1 (TA)".

Similarly, the user terminal 300 also downloads personal information of the user PX from the file server 104b. The data "item TA: data D1" is overlapping data that is acquired from both of the file server 104a and the file server 104b. In this case, the data managing unit 320 registers only one data D1 (TA) in the data storage unit 308.

Upon receiving "item TB: data D2" from the file server 104a, the user terminal 300 associates data D2 with a tag TB, and saves the data D2. Subsequently, upon receiving "item TE: data D2" from the file server 104b, the data D2 is also associated with a tag TE. Thus, the data managing unit 320 registers data D2 (TB, TE) in the data storage unit 308. For example, TB may represent "address", TE may represent "place", and the file server 104a and the file server 104b may manage the same data D2 with item names different from each other. In this case, the data managing unit 320 associates a single data D2 with two tags TB (address) and TE (place).

The data "item TC: data D3" held in the file server 104a is also held in the file server 104b. The data "item TD: data D4" held in the file server 104a is not held in file server 104b, and the data "item TF: data D5" held in the file server 104b is not held in the file server 104a. The user terminal 300 can collect data managed only by the file server 104a and data managed only by the file server 104b into the user terminal 300 by accessing both the file server 104a and the file server 104b.

### [Second Embodiment]

In the second embodiment, personal information is selectively transmitted from a user terminal 300, in which a DI engine is mounted, to a document generation device 100, and the document generation device 100 generates various official documents on the basis of the received personal information. Official documents are transmitted in a form of electronic data from the document generation device 100 to the user terminal 300.

FIG. 7 is a schematic diagram for explaining output control using a second filter 330.

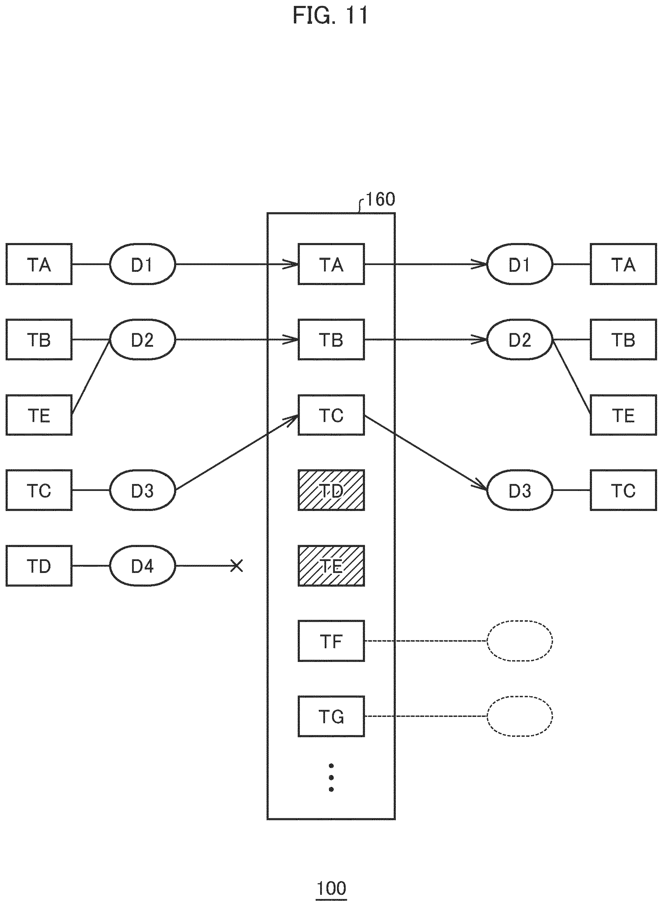

The user terminal 300 controls the range of personal information permitted to be output by using the second filter 330. In the meantime, the document generation device 100 controls the range of personal information permitted to be input by using a first filter. The first filter will be described later with reference to FIG. 11. In the second filter 330, tags that permit output of data (hereinafter referred to as "permission tags") and tags that do not permit output of data (hereinafter referred to as "inhibition tags") are set. In the second filter 330 illustrated in FIG. 7, four permission tags TA, TC, TD, and TE are present, and two inhibition tags TB and TF are present. The user PX specifies permission tags and inhibition tags of the second filter 330 in the user terminal 300. The filter setting unit 318 sets the second filter 330 in accordance with the specification made by the user PX. The transmitting unit 314 determines whether or not various data stored in the data storage unit 308 are permitted to be output in accordance with the second filter 330.

Because the tag TA of the data D1 (TA) is a permission tag, the transmitting unit 314 transmits the data D1 (TA) to an external device such as the document generation device 100. Although the tag TB of the data D2 (TB, TE) is an inhibition tag, the tag TE is a permission tag, and the transmitting unit 314 therefore permits transmission of the data D2 (TB, TE) as well. In this manner, when one data is associated with a plurality of tags, the transmitting unit 314 permits transmission if any one of the tags is a permission tag.

Because the tag TC is a permission tag, the transmitting unit 314 permits transmission of data D3 (TC). Similarly, because the tag TD is also a permission tag, the transmitting unit 314 also transmits data D4 (TD). In contrast, because the tag TF is an inhibition tag, data D5 (TF) is not output from the user terminal 300. As a result of setting the second filter 330 in this manner, the user PX can control "data that is permitted to be output to the outside" and "data that should not be output to the outside" among a variety of personal data stored in the data storage unit 308.

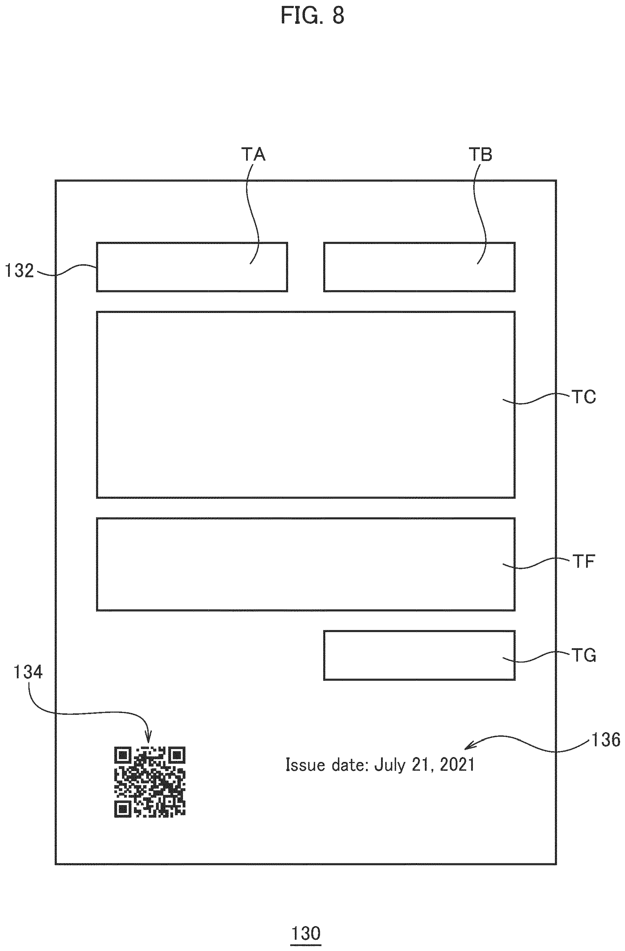

FIG. 8 illustrates an example of formats of official documents 130 issued by the document generation device 100.

As described above, the document generation device 100 issues various official documents 130 such as copies of resident register and driver's licenses. For each official document 130, necessary data, a layout, a design, and the like are determined in advance. The official document 130 illustrated in FIG. 8 is a copy of resident register on which five entry fields 132 of different sizes are set. In the description as follows, assume a scene where the user PX get the official document 130 illustrated in FIG. 8 issued.

The five entry fields 132 are associated with tags TA, TB, TC, TF, and TG, respectively. Thus, for issuance of the official document 130, the user PX needs to provide data associated with these tags to the document generation device 100.

When issuing the official document 130, the document generating unit 126 enters the issue date and time in an issue date field 136. In addition, when issuing the official document 130, the document generating unit 126 generates a document ID for identifying the issued official document 130. A two-dimensional (2D) code 134 including the document ID and the issue date and time is also provided on the official document 130. The document generating unit 126 may make the two-dimensional code 134 include a uniform resource identifier (URI) of the document generation device 100.

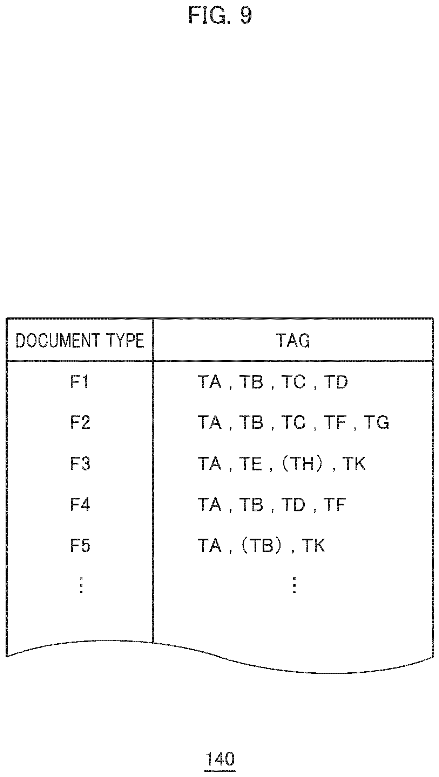

FIG. 9 is a data structure diagram of a document definition table 140.

The document definition table 140 is stored in the data storage unit 114 of the document generation device 100. The document definition table 140 is a file defining necessary tags (items) for each document type. A document type indicates the type of an official document 130. Personal information to be entered varies depending on the document type. For example, the kinds and the amount of data to be entered on a copy of resident register are different from those of data to be entered on a library card.

An official document 130 of a document type F1 (hereinafter referred to as an "official document 130 (F1)") need data to which tags TA, TB, TC, and TD are assigned. Tags necessary for an official document 130 include "essentiality tags" and "optionality tags". Hereinafter, data associated with an essentiality tag will be referred to as "essential data", and data associated with an optionality tag will be referred to as "optional data". In addition, a tag that is not needed for preparation of an official document 130 will be referred to as an "unnecessity tag", and data associated with an unnecessity tag will be referred to as "unnecessary data".

All of the four tags TA, TB, TC, and TD described above are essentiality tags for the official document 130 (F1). When essential data associated with these four tags are provided from the user PX, the document generating unit 126 can generate the official document 130 (F1).

For an official document 130 (F3), tags TA, TE, and TK are essentiality tags, and a tag TH is an optionality tag. When the essential data associated with the essentiality tags TA, TE, and TK are acquired, the document generating unit 126 generates the official document 130 (F3). When the optional data (TH) is also provided, the document generating unit 126 also enters the optional data (TH) on the official document 130 (F3). When the optional data (TH) cannot be acquired, the document generating unit 126 issues the official document 130 (F3) without the optional data (TH).

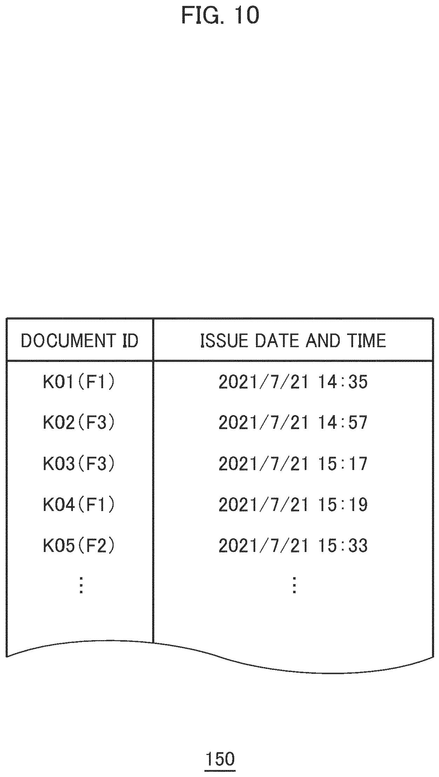

FIG. 10 is a data structure diagram of issue history information 150.

The issue history information 150 is also stored in the data storage unit 114 of the document generation device 100. As described above, when issuing an official document 130 in response to a request from a user, the document generating unit 126 generates a document ID, and records the issue date and time. The document generating unit 126 provides a two-dimensional code 134 including the document ID and the issue date and time on the official document 130, and also registers the document ID and the issue date and time in the issue history information 150. For example, an official document 130 with a document ID K01 is of a document type "F1", and issued "at 14:30 on July 21, 2021". Hereinafter, the document ID and the issue date and time will be collectively referred to as "issue information".

FIG. 11 is a schematic diagram for explaining input control using a first filter 160.

As described above, the user terminal 300 controls the range of personal information permitted to be output by using the second filter 330. The document generation device 100 controls the range of personal information permitted to be input by using the first filter 160. Thus, only data permitted to be output by the second filter 330, among the personal information stored in the user terminal 300, are transmitted to the document generation device 100, and only data permitted to be input by the first filter 160, among the data transmitted from the user terminal 300, are accepted as data to be processed by the document generation device 100.

Assume that the user PX has requested to the document generation device 100 to issue an official document 130 (F2). As illustrated in FIG. 9, the official document 130 (F2) includes five essentiality tags TA, TB, TC, TF, and TG. Note that the official document 130 (F2) corresponds to the official document 130 illustrated in FIG. 8.

Upon receiving the request for issuing the official document 130 (F2) from the user terminal 300 of the user PX, the filter setting unit 128 of the document generation device 100 sets the permission tags and the inhibition tags of the first filter 160 on the basis of the document definition table 140. Specifically, essentiality tags and optionality tags are set as permission tags, and unnecessity tags are set as inhibition tags. In the case of the official document 130 (F2), the tags TA, TB, TC, TF, and TG are permission tags, and the tags TD and TE are inhibition tags.

The data D1 (TA), the data D2 (TB, TE), the data D3 (TC), and the data D4 (TD) are transmitted from the user terminal 300 of the user PX through the second filter 330 to the document generation device 100 (see also FIG. 7).

The checking unit 122 of the document generation device 100 determines whether or not to accept these four kinds of data on the basis of the first filter 160. Because the tags TA, TB, and TC are permission tags, the checking unit 122 accepts the data D1 (TA), the data D2 (TB, TE), and the data D3 (TC). Because the tag TB is an inhibition tag and the tag TE is a permission tag in the second filter 330 for output, the data D2 (TB, TE) is output in accordance with the tag TE. On the other hand, because the tag TB is a permission tag and the tag TE is an inhibition tag in the first filter 160 for input, the data D2 (TB, TE) is received in accordance with the tag TB. In this manner, data with a plurality of tags is likely to be permitted to be output and input.

Because the tag TD is an inhibition tag, the checking unit 122 does not accept the data D4 (TD). The checking unit 122 temporarily receives the data D4 (TD), and then removes the data D4 (TD) from a local memory. The checking unit 122 does not leave the data D4 (TD) in a local storage, either. Thus, no unnecessary data are left in the document generation device 100 when the official document 130 (F2) is generated. The user PX uses the second filter 330 to define the range of personal information permitted to be output and the document generation device 100 guarantees that unnecessary personal information is not acquired and saved, which enables the amount of information provided from the user terminal 300 to the document generation device 100 to be limited to the minimum necessary.

The essential data D5 (TF) associated with the permission tag TF is saved in the user terminal 300 (see FIG. 7). Because the user PX has set the tag TF as an inhibition tag in the second filter 330, the essential data D5 (TF) is not transmitted to the document generation device 100.

The essential data associated with the permission tag TG is not saved in the user terminal 300. The user PX needs to provide the essential data associated with the tags TF and TG to the document generation device 100 so as to get the official document 130 (F2) issued. Hereinafter, a tag associated with data that is necessary for generation of an official document 130 but is not provided from the user terminal 300 will be referred to as "insufficiency tag". In addition, data associated with an insufficiency tag will be referred to as "insufficient data". In other words, insufficient data is essential data that is not provided from the user terminal 300 to the document generation device 100. In the example of FIG. 11, the tags TF and TG are insufficiency tags for the official document 130 (F2).

With respect to the insufficiency tag TF, the user PX needs to adjust the second filter 330 so that the essential data D5 (TF) is output, details of which will be described later. Specifically, the user PX sets the insufficiency tag TF to a permission tag. With respect to the insufficiency tag TG, the user PX needs to manually input data (personal information) associated with the insufficiency tag TG.

Note that the filter setting unit 128 of the document generation device 100 also sets an optionality tag to a permission tag in the first filter 160. For example, in the case of the official document 130 (F3), the user sets the optionality tag TH to a permission tag in the first filter 160. Because the document generating unit 126 can generated the official document 130 (F3) without the optional data (TH), the optionality tag TH is not set to an insufficiency tag in this case.

The terms relating to the tags and data are summarized as follows:
essential data: data necessary for generating an official document 130;
optional data: data that can be entered on an official document 130 but is not stated on an official document 130 when the data is not provided;
unnecessary data: data that are not used for an official document 130;
insufficient data: data that is not provided from user among essential data for an official document 130;
essentiality tag: a tag associated with essential data;
optionality tag: a tag associated with optional data;
unnecessity tag: a tag associated with unnecessary data;
insufficiency tag: a tag associated with insufficient data;
permission tag: a tag permitting passage through the second filter 330 or the first filter 160, an essentiality tag and an optionality tag being permission tags in the first filter 160;
inhibition tag: a tag inhibiting passage through the second filter 330 or the first filter 160, an unnecessity tag being an inhibition tag in the first filter 160.

Permission tags and inhibition tags in the second filter 330 and permission tags and inhibition tags of the first filter 160 determines whether various data included in personal information are to be accepted by the document generation device 100.

Hereinafter, the following tags are set.

A tag T1 is a permission tag at both of the second filter 330 and the first filter 160.

A tag T2: is a permission tag in the second filter 330 and an inhibition tag in the first filter 160.

A tag T3 is an inhibition tag in the second filter 330 and a permission tag in the first filter 160.

A tag T4 is an inhibition tag in the second filter 330 and an inhibition tag in the first filter 160.

Data (T1) passes through the second filter 330 and is transmitted from the user terminal 300 to the document generation device 100. The data (T1) also passes through the first filter 160 and accepted as data to be processed by the document generation device 100.

Data (T2) passes through the second filter 330 and is transmitted from the user terminal 300 to the document generation device 100. The data (T2) cannot pass through the first filter 160, and is therefore removed from a local memory (reception memory) after being temporarily received by the document generation device 100.

Data (T3) cannot pass through the second filter 330, and is not therefore output from the user terminal 300.

Data (T4) cannot pass through the second filter 330, and is not therefore output from user terminal 300.

Thus, only data with the tag T1 is to be processed by the document generation device 100.

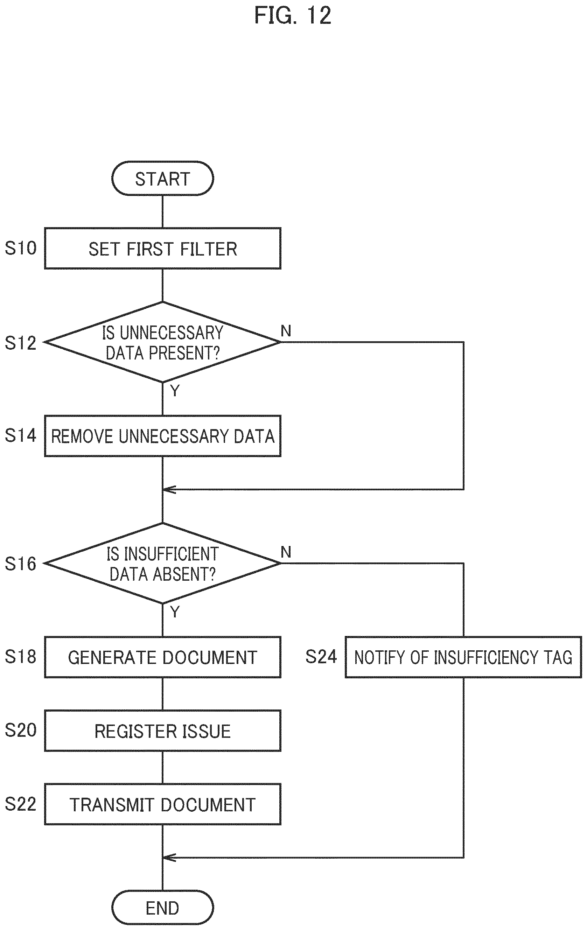

FIG. 12 is a flowchart illustrating processes for issuing an official document by the document generation device 100 according to the second embodiment.

A user first transmits an issue request specifying a document type together with a user ID and a password. At the same time as the issue request, the user terminal 300 transmits part of personal information in accordance with the second filter 330 to the document generation device 100. The processes illustrated in FIG. 12 are started after the issue request and the part of the personal information are received by the document generation device 100.

The filter setting unit 128 of the document generation device 100 sets the first filter 160 depending on the document type (S10). The checking unit 122 checks whether unnecessary data is included in the data received from the user terminal 300 (S12). In the case of the example illustrated in FIG. 11, the data D4 (TD) is unnecessary data. If unnecessary data is present (Y in S12), the checking unit 122 removes the unnecessary data from the local memory (reception memory) (S14). If no unnecessary data is present (N in S12), the process in S14 is skipped.

Subsequently, the checking unit 122 checks whether no insufficient data is present (S16). If insufficient data is present (N in S16), the notifying unit 120 notifies the user terminal 300 of the insufficiency tag (S24). Upon being notified of the insufficiency tag, the user terminal 300 needs to transmit data associated with the insufficiency tag to the document generation device 100. The method in which the user terminal 300 responds to the insufficiency tag notification will be described later.

If no insufficient data is present (Y in S16), that is, if all the essential data for the official document 130 are provided, the document generating unit 126 generates the official document 130 (S18). Specifically, the document generating unit 126 enters essential data or optional data received from the user PX into each of the entry fields 132 of the official documents 130 and additionally enters the two-dimensional code 134 and the issue date field 136 to generate the official document 130. The document generating unit 126 registers issue information (the document ID and the issue date and time) in the issue history information 150 (S20).

The transmitting unit 118 transmits the generated official document 130 as electronic data such as a PDF (Portable Document Format) file to the user terminal 300 (S22). Alternatively, the document generating unit 126 may arrange to print the official document 130 with an attached printer and send the printed document to the address of the user PX by mail.

As described above, the document generation device 100 obtains personal information within a range necessary for generation of an official document 130 and enters essential data or optional data into each of the entry fields 132 to generate the official document 130. After the official document 130 is generated, the checking unit 122 removes all the data received from the user terminal 300 from the local memory and the local storage. Similarly, after transmitting the official document 130, the document generating unit 126 also removes the official document 130 itself from the local memory and the local storage. According to this control method, the document generation device 100 obtains personal information only for generating an official document 130 and does not hold the personal information thereafter, which minimizes the risk of leakage of the personal information of the user PX from the document generation device 100.

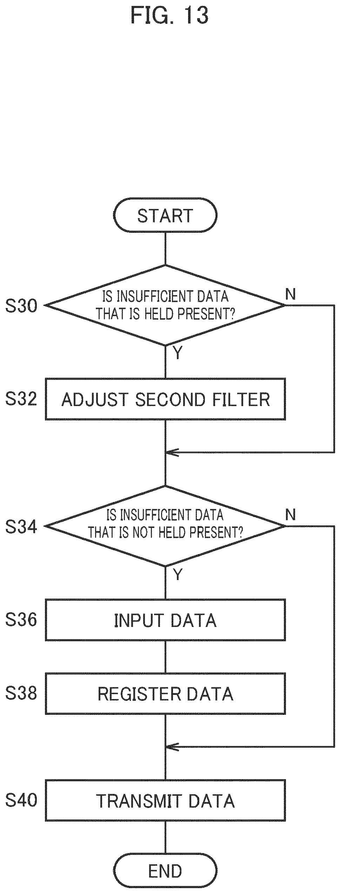

FIG. 13 is a flowchart illustrating processes performed by the user terminal 300 upon being informed of an insufficiency tag.

When an insufficiency tag is present, that is, when essential data for an official document 130 is missing, the notifying unit 120 of the document generation device 100 notifies the user terminal 300 of an insufficiency tag. Assume here that the tags TF and TG are insufficiency tags in the notification on the basis of the example in FIG. 11.

If the insufficient data, that is, unprovided essential data is stored in the data storage unit 308 of the user terminal 300 (Y in S30), the user PX adjusts the second filter 330 (S32). For example, because the insufficient data D5 (TF) is present in the data storage unit 308 (see FIG. 7), the user PX may change the setting of tag TF in the second filter 330 to a permission tag. If the insufficient data is not stored in the data storage unit 308 (N in S30), the process in S32 is skipped.

If insufficient data that have not been output still remains after adjustment of the first filter 160 (Y in S34), or in other words, if insufficient data is not held, the user PX newly inputs data (S36). In this process, the output unit 312 of the user terminal 300 prompts the user to enter data associated with a tag TG on a data supplement screen 340, which will be described later. Alternatively, the output unit 312 may display "Please input data associated with tag TG" and also display a data input screen. When the tag TG is associated with "date of birth", the output unit 312 may display a data input screen for inputting the date of birth. Because the data associated with the insufficiency tag TG is not in the data storage unit 308, the user PX inputs data DX associated with the insufficiency tag TG into the user terminal 300 (S36). The input unit 310 of the user terminal 300 accepts input of data DX. The data managing unit 320 of the user terminal 300 associates the newly input data DX with a tag TG, and registers data DX (TG) in the data storage unit 308 (S38). If no insufficient data is present (N in S34), the processes in S36 and S38 are skipped.

After all the insufficient data for the official document 130 are supplied, the transmitting unit 314 additionally transmits the insufficient data to the document generation device 100 (S40). When the insufficiency tags are the tags TF and TG, the transmitting unit 314 transmits the data D5 (TF) and the data DX (TG). Through the processes described above, the document generation device 100 acquires the essential data for the official document 130.

Assume that data DX (TI) is registered in the data storage unit 308. When the user PX inputs the data DX in association with the insufficiency tag (TG), the data managing unit 320 newly associates data DX, which is already associated with the tag TI, with the tag TG. After the data DX is input, the data DX is managed as data DX (TG, TI) that can be associated with both of the tags TG and TI.

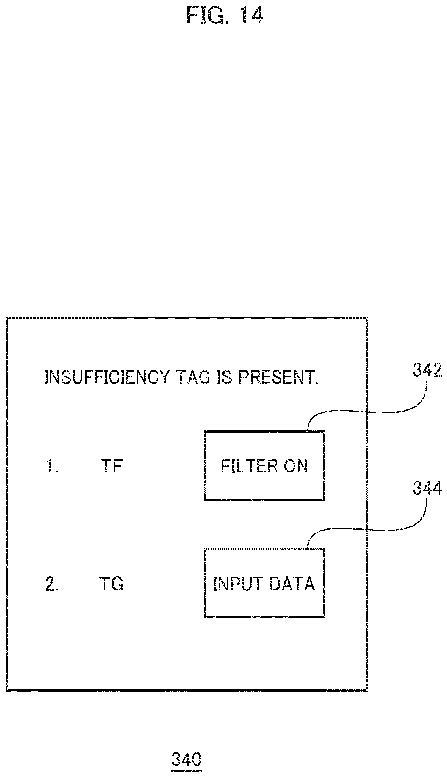

FIG. 14 is a screen diagram of the data supplement screen 340.

Upon being notified of an insufficiency tag from the document generation device 100, the output unit 312 of the user terminal 300 displays the data supplement screen 340. Assume here that the user terminal 300 is notified of insufficiency tags TF and TG. The output unit 312 displays a filter adjustment button 342 next to the insufficiency tag TF and a data input button 344 next to the insufficiency tag TG.

More specifically, when the insufficient data (TF) is present in the data storage unit 308, the output unit 312 displays the filter adjustment button 342 for adjusting the second filter 330 at a position associated with the tag TF. When the user PX touches the filter adjustment button 342, the filter setting unit 318 changes the tag TF from an inhibition tag to a permission tag in the second filter 330 (S32 in FIG. 13), as a result of changing the setting of the second filter 330, transmission of the insufficient data D5 (TF) to the document generation device 100 is enabled.

When the insufficient data (TG) is not present in the data storage unit 308, the output unit 312 displays the data input button 344 for inputting data at a position associated with the tag TG. When the user touches the data input button 344, the output unit 312 displays the data input screen (not illustrated). When the user inputs the data DX on the data input screen, the data managing unit 320 registers the data DX in association with the tag TG in the data storage unit 308. In addition, transmission of the insufficient data DX (TG) to the document generation device 100 is enabled.

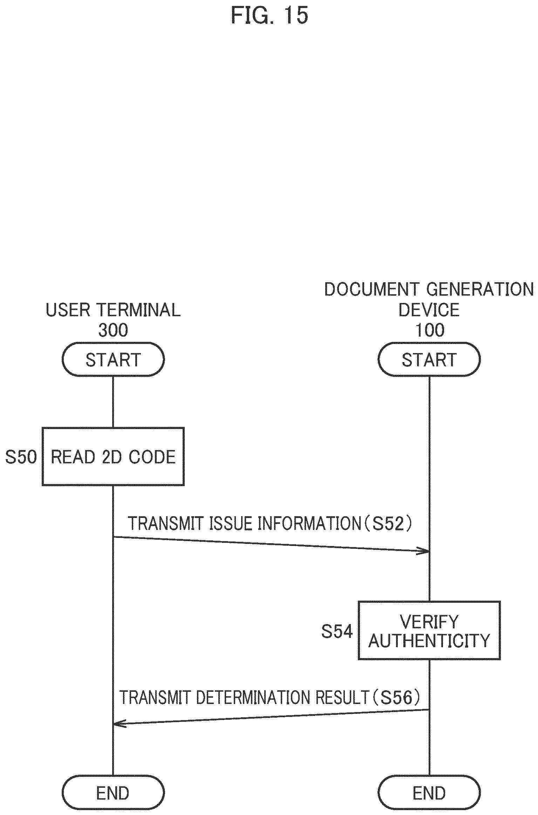

FIG. 15 is a sequence diagram illustrating processes for checking authenticity of an official document 130.

In the description herein, assume a scene where a user PY to whom a user PX has presented an official document 130X checks the authenticity of the official document 130X. The user PY reads a two-dimensional code 134 on the official document 130X by using his/her user terminal 300 (S50). The transmitting unit 314 of the user terminal 300 transmits issue information (document ID and issue date and time) included in the two-dimensional code 134 to the document generation device 100 (S52).

When the received issue information is registered in the issue history information 150, the verification unit 124 of the document generation device 100 determines that the official document 130X is authentic. When the received issue information is not registered in the issue history information 150, the verification unit 124 determines that the official document 130 is a false document that has not been issued by the document generation device 100 (S54). The transmitting unit 118 transmits the determination result to the user terminal 300 (S56).

The user PY to whom the user PX has presented the official document 130X can easily check whether or not the official document 130X is authentic by checking with the document generation device 100 on the basis of the issue information included in the two-dimensional code 134.

### [Third Embodiment]

In the third embodiment, personal information is selectively transmitted from a user badge 350 to a document generation device 100 via a relay terminal 400, and the document generation device 100 generates various official documents 130 on the basis of the received personal information. Each official document 130 is transmitted as electronic data from the document generation device 100 to the relay terminal 400.

In the third embodiment, personal information is recorded in the user badge 350. The user badge 350 has a DI engine mounted therein, but is different from the user terminal 300 in not including user interface functions and the Internet connecting functions. The user badge 350 includes personal information and the second filter 330. The user badge 350 can transmit and receive data via near field communication, such as Near Field Communication (NFC) or Bluetooth (registered trademark), which does not use the Internet 102.

The user PX can also copy the personal information and the second filter 330 from the user terminal 300 to the user badge 350. For example, if a badge ID of the user badge 350 is registered in the user terminal 300, the transmitting unit 314 of the user terminal 300 can write the personal information and the second filter 330 only into the registered user badge 350.

The user badge 350 is a badge-type information carrier. Alternatively, an information carrier may be of a card type. A variety of accessories such as a ring, a wrist band, and glasses may have the functions of an information carrier (DI engine).

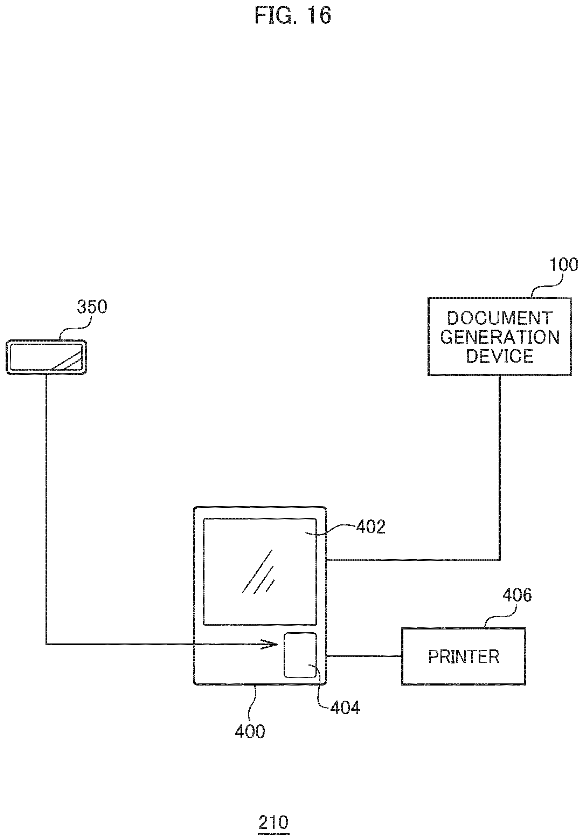

FIG. 16 is a hardware configuration diagram of a document generation system 210 according to the third embodiment.

In the document generation system 210, the document generation device 100 and the relay terminal 400 are connected with each other in a wired or wireless manner. Because the user badge 350 does not have the functions for communicating via the Internet 102, the user badge 350 transmits data to the document generation device 100 via the relay terminal 400 in the third embodiment.

The relay terminal 400 is installed in a common store. A printer 406 is connected with the relay terminal 400. The relay terminal 400 includes a monitor 402 with a touch panel, and a reader/writer 404 capable of reading and writing data via near field communication. The user PX holds the user badge 350 over the reader/writer 404 to make the relay terminal 400 read personal information. The relay terminal 400 transmits the personal information read from the user badge 350 to the document generation device 100, and the document generation device 100 generates an official document 130 and transmits electronic data of the official document 130 to the relay terminal 400. The relay terminal 400 prints the official document 130 with the printer 406.

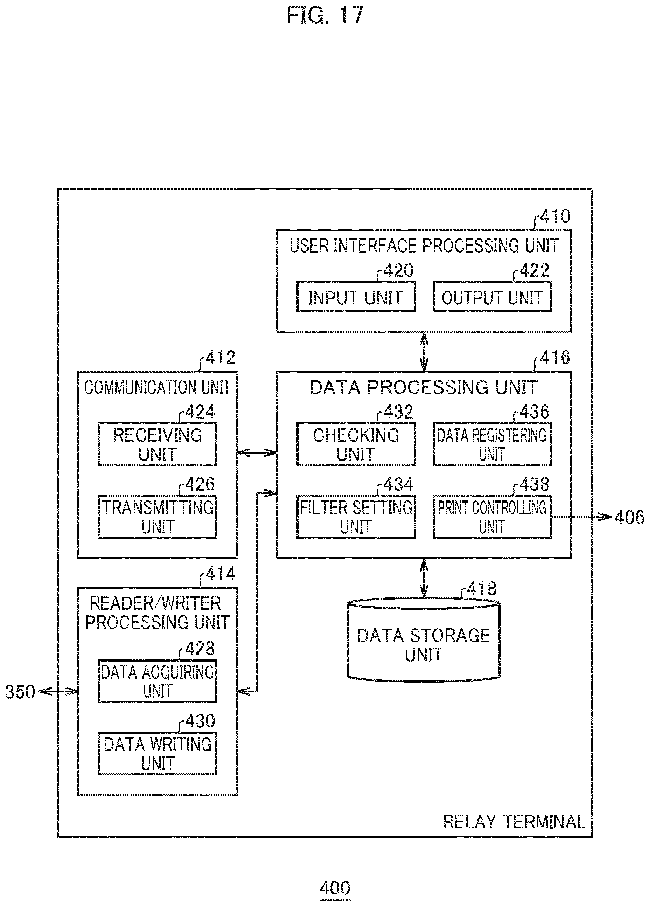

FIG. 17 is a functional block diagram of the relay terminal 400.

The relay terminal 400 includes a user interface processing unit 410, a communication unit 412, a reader/writer processing unit 414, a data processing unit 416, and a data storage unit 418. The user interface processing unit 410 receives operations performed by the user, and performs processing relating to the user interface such as image display and audio output. The communication unit 412 performs processing for communication with the document generation device 100 via a wireless communication network. The reader/writer processing unit 414 causes the reader/writer 404 to transmit and receive data to and from the user badge 350. The data storage unit 418 stores various information data. The data processing unit 416 performs various processes on the basis of data acquired by the user interface processing unit 410, the communication unit 412, and the reader/writer processing unit 414, and data stored in the data storage unit 418. The data processing unit 416 also functions as an interface of the user interface processing unit 410, the communication unit 412, the reader/writer processing unit 414, and the data storage unit 418.

The user interface processing unit 410 includes an input unit 420 and an output unit 422. The input unit 420 receives various operations performed by the user via the touch panel. The output unit 422 outputs a variety of information in the form of images, audio, or the like.

The communication unit 412 incudes transmitting unit 426 for transmitting various information data to the document generation device 100, and a receiving unit 424 for receiving various information data from the document generation device 100. The transmitting unit 426 receives the first filter 160 from the document generation device 100.

The reader/writer processing unit 414 includes a data acquiring unit 428 for reading data from the user badge 350, and a data writing unit 430 for writing data into the user badge 350.

The data processing unit 416 includes a checking unit 432, a filter setting unit 434, a data registering unit 436, and a print controlling unit 438.

The checking unit 432 selects data to be transmitted to the document generation device 100 from data acquired from the user badge 350 on the basis of the first filter 160. The filter setting unit 434 sets the first filter 160 received from the document generation device 100. In addition, the filter setting unit 434 may change settings of permission tags and inhibition tags in the second filter 330 in accordance with an instruction from the user. The data registering unit 436 registers data into the user badge 350. The print controlling unit 438 controls the printer 406.

Note that the DI engine of the user badge 350 encrypts written data, saves the encrypted data in a local storage therein, and decrypts encrypted data when outputting the data from the local storage.

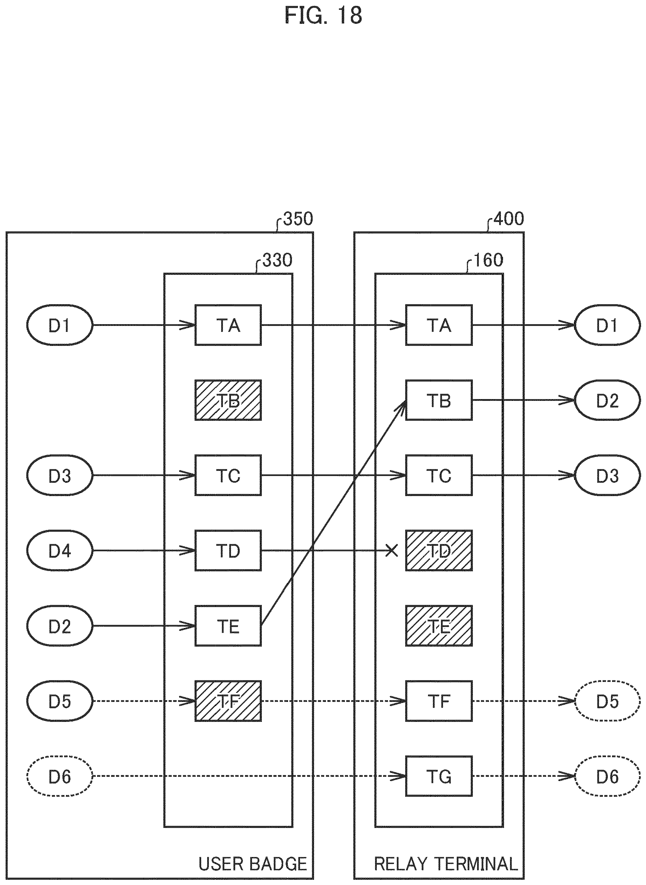

FIG. 18 is a schematic diagram for explaining input/output control of personal information in the third embodiment.

The user badge 350 stores various personal information data and the second filter 330. In a manner similar to FIG. 6, assume that the user badge 350 contains data D1 (TA), data D2 (TB, TE), data D3 (TC), data D4 (TD), and data D5 (TF). In addition, in a manner similar to FIG. 7, assume that the tags TA, TC, TD, and TE are permission tags and the tags TB and TF are inhibition tags in the second filter 330.

The second filter 330 allows the data D1 (TA), the data D2 (TB, TE), the data D3 (TC), and the data D4 (TD) to be output from the user badge 350, and does not allow the data D5 (TF) to be output therefrom. As described above, the DI engine of the user badge 350 performs decoding for outputting data.

A user PX inputs a user ID, a password, and a document type (example: copy of resident register) of an official document 130 to be issued onto the monitor 402. The transmitting unit 426 of the relay terminal 400 notifies the document generation device 100 of the document type. The filter setting unit 128 of the document generation device 100 sets a first filter 160 associated with the document type, and transmits the first filter 160 to the relay terminal 400. Assume here that a document type (F2) is specified and that the first filter 160 illustrated in FIG. 11 is transmitted. Specifically, the tags TA, TB, TC, TF, and TG are set as permission tags and the tags TD and TE are set as inhibition tags in the first filter 160.

The filter setting unit 434 of the relay terminal 400 sets the first filter 160 received from the document generation device 100. The checking unit 432 determines whether or not to accept data output from the user badge 350 in accordance with the first filter 160.

In accordance with the first filter 160, the filter setting unit 434 accepts the data D1 (TA), the data D2 (TB, TE), and the data D3 (TC), but does not accept the data D4 (TD). The filter setting unit 434 removes the data D4 (TD), which has been temporarily received, from the local memory.

The checking unit 432 refers to the first filter 160 and the received data to identify the insufficiency tags TF and TG. In this process, the output unit 422 displays a screen similar to the data supplement screen 340 illustrated in FIG. 14 on the monitor 402. The user PX can set the tag TF as a permission tag in the second filter 330 by touching the filter adjustment button 342. In this process, the filter setting unit 434 changes the setting of the second filter 330 of the user badge 350 via the data writing unit 430, the data acquiring unit 428 acquires the insufficient data D5 (TF) from the user badge 350. The transmitting unit 426 transmits the insufficient data D5 (TF) to the document generation device 100.

The user PX can input data DX associated with the tag TG by touching the data input button 344. The transmitting unit 426 transmits the insufficient data DX (TG) to the document generation device 100. In addition, the data registering unit 436 writes the data DX (TG) into the user badge 350 via the data writing unit 430.

Note that, when writing the data DX (TG) into the user badge 350, the user PX may be allowed to specify the tag TG to be a permission tag or an inhibition tag in the second filter 330. The filter setting unit 318 adds the setting of the tag TG in the second filter 330 in accordance with an instruction from the user PX.

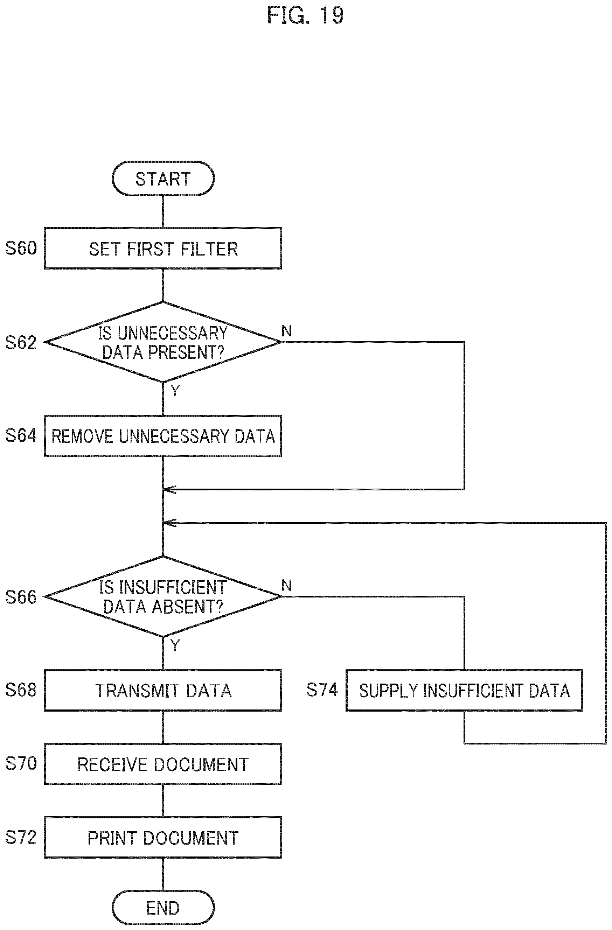

FIG. 19 is a flowchart illustrating processes for issuing an official document performed by the relay terminal 400 according to the third embodiment.

A user first inputs an issue request specifying a document type together with a user ID and a password into the relay terminal 400. The relay terminal 400 notifies the document generation device 100 of the document type, and the filter setting unit 128 of the document generation device 100 transmits a first filter 160 associated with the document type to the relay terminal 400. The document generation device 100 also notifies the relay terminal 400 of which of an essentiality tag and an optionality tag each of permission tags in the first filter 160 is. After such preparation is completed, the processes illustrated in FIG. 19 are started.

The filter setting unit 434 of the relay terminal 400 sets the first filter 160 (S60). The checking unit 432 checks whether or not unnecessary data, that is, data associated with an inhibition tag in the first filter 160 is present among various data received from the user badge 350 (S62). If unnecessary data is present (Y in S62), the checking unit 432 removes the unnecessary data from the local memory (S64) . If no unnecessary data is present (N in S62), the process in S64 is skipped.

Subsequently, the checking unit 432 checks whether no insufficient data is present, that is whether data associated with essentiality tags are not missing (S66). If the essential data are not missing (Y in S66), the transmitting unit 426 transmits all the essential data necessary for preparation of the official document 130 among the data received from the user badge 350 to the document generation device 100 (S68). Note that, when optional data is also acquired, the transmitting unit 426 also transmits the optional data to the document generation device 100.

The document generating unit 126 of the document generation device 100 prepares the official document 130, and the transmitting unit 118 of the document generation device 100 transmits the official document 130 (electronic data) to the relay terminal 400. The receiving unit 424 of the relay terminal 400 receives the official document 130 (S70). The print controlling unit 438 controls the printer 406 to print the official document 130 (S72). According to such a control method, the user PX can receive the requested official document 130 at a store only by holding the user badge 350 over the reader/writer 404 of the relay terminal 400.

In contrast, if essential data is missing (N in S66), the output unit 422 prompts the user PX to supply the insufficient data (S74). As described above, the user PX supplies the insufficient data by adjusting the second filter 330 or newly inputting data.

### [Overview]

The document generation systems 200 and 210 have been described above with reference to the embodiments.

A user can consolidate personal information to the user terminal 300 by accessing a plurality of file servers 104. Because the method consolidates personal information distributed in various file servers 104 into the user terminal 300, the burden of registering personal information in the user terminal 300 is significantly reduced as compared with that of manually registering personal information.

As described with reference to FIG. 6, one data D2 may be managed with different item names between the file server 104a and the file server 104b. In this case, the user terminal 300 associates the data D2 with the two item names as tags TB and TE, which facilitates passage of the data D2 through passage check based on various first filters 160 and second filters 330.

For example, assume that a user is to permit output of information relating to his/her residence. In this case, the user may set a tag TB (address) as a permission tag in the second filter 330, or a tag TE (place) as the permission tag. When the user has set the tag TB associated with "information relating to residence" as the permission tag, the user need not also set the tag TE (place) as the permission tag. Thus, even in a case where many tags with similar names are generated, by selecting only one tag as a permission tag, the user can practically set related tags as permission tags, which facilitates management of data even when a variety of tags are used.

When there assumed to be many document generation devices 100 operated by various agencies, the names of permission tags are not necessarily the same among the document generation devices 100. For example, "information relating to residence" may be associated with a tag TB (address) in the document generation device 100a, while the "information relating to residence" may be associated with a tag TE (place) in the document generation device 100b. In this case, as described above, a plurality of tags may be associated with one data, so as to make data management flexible.

The user can define the range of personal information permitted to be output by setting a second filter 330. Because personal information is unlimitedly accumulated in the user terminal 300 or the user badge 350 and the range of personal information permitted to be output is then set, control can be performed to prevent excessive information output while consolidating personal information into the user terminal 300 or the like.

The user can receive the official document issuing service provided by the document generation device 100 anytime and anywhere by accessing the document generation device 100 from the user terminal 300 or by holding the user badge 350 over the relay terminal 400. In other words, the user can have his/her identity proved by a public agency 24 hours a day, every day of the year.

The document generation device 100 sets the first filter 160 depending on the document type of each official document 130. Because the document generation device 100 or the relay terminal 400 removes data that are not necessary for preparation of an official document 130 from the local memory and the local storage, the document generation device 100, etc. no longer collect unnecessary data. Furthermore, the document generation device 100, etc. may remove all the received personal information from the local memory or the local storage after issuing each official document 130, which enables stricter information management.

Because double filters of the first filter 160 and the second filter 330 are used, the user can additionally supply insufficient data by adjusting the second filter 330 when all the data necessary for preparation of an official document 130 are not provided. In other words, the user only needs to adjust the second filter 330 depending on an insufficiency tag to additionally transmit data to the document generation device 100 within the minimum necessary range. In addition, when the user inputs new data in association with an insufficiency tag, the insufficiency tag and the new data are associated with each other and registered in the user terminal 300 or the user badge 350.

Each time the user newly inputs data in association with an insufficiency tag, personal information is more enhanced and the same data need not be input next and subsequent times, which improves the convenience. Furthermore, when newly input data DX corresponds to data already associated with another tag T1, the data DX is additionally associated with an insufficiency tag T2. As a result, the same data DX can be used for both of the tags T1 and T2 next and subsequent times, which increases the range of application of the data DX. In this manner, when the document issuing service provided by the document generation device 100 is used, the flexibility of data management is increased.

For issuing an official document 130, the document generation device 100 registers issue information in the issue history information 150. The user can therefore readily check whether the official document 130 is an authentic document or a false document by reading the two-dimensional code 134 on the official document 130 and checking with the document generation device 100.

The user can transfer or copy the personal information in the user terminal 300 together with the second filter 330 to the user badge 350. The user can easily receive identity proving services by carrying the user badge 350, which is more lightweighted and easier to carry than the user terminal 300. The DI engine of the user badge 350 encrypts personal information before saving it in case of a loss of the user badge 350. When personal information using the user ID and the password is not successful, the relay terminal 400 may reject data from the reader/writer 404.

The present invention is not limited to the embodiments described above and modifications thereof, and any component thereof can be modified and embodied without departing from the scope of the invention. Components described in the embodiments and modifications can be combined as appropriate to form various other embodiments. Some components may be omitted from the components presented in the embodiments and modifications.

### [Modifications]

In the description of the present embodiment, a scene where the document generation device 100 is operated by a public agency and the user receives a service of issuing an official document 130 such as a copy of resident register from the document generation device 100 is assumed. The document generation device 100 may issue various documents other than official documents 130. Examples of documents that are issued may include point cards (reward cards) of companies, mailing labels of parcels, New Year's cards, investment reports, work reports, receipts, medical records, and payment slips. In addition, "documents" generated by the document generation device 100 may be electronic data including information in formats other than text, such as static images, video files, and audio files.

The document generation device 100 need not acquire all the data necessary for preparation of a document from the user. Some of essential data or optional data included in a document may be data saved in advance in the document generation device 100, or may be acquired by the document generation device 100 from other file servers 104.

The document generation device 100 or the relay terminal 400 may present the first filter 160 to the user. For example, the transmitting unit 118 of the document generation device 100 may transmit the first filter 160 to the user terminal 300 or the relay terminal 400, and cause display of a list of permission tags set in the first filter 160. The user may refer to the first filter 160 (the list of permission tags) before preparation of a document, check the essentiality tags and the optionality tags for each document.

A plurality of second filters 330 may be used. The user may select any of the second filters 330 as necessary. For example, the user may select a second filter 330 depending on the device to which data are to be output.

The user may combine a plurality of second filters 330 depending on the device to which data are to be output. For example, the user may use a second filter 330A for a device Y1 to which data are to be output, and a second filter 330A and use a second filter 330B for a device Y2 to which data are to be output. In this case, the transmitting unit 314 of the user terminal 300 may output only data set with permission tags in both of the second filter 330A and the second filter 330B. According to such a control method, the strength of the limitation of the range in which personal information is permitted to be output can be controlled depending on the device to which data are to be output by the number of second filters 330 to be used.

In the description of the present embodiment, the two-dimensional code 134 contains the document ID and the issue date and time as issue information. In a modification, the two-dimensional code 134 may contain hash values of the document ID and the issue date and time. When the hash values are used, the document ID, etc. cannot be directly read from the two-dimensional code 134, which makes it more difficult to forge a document by falsifying the two-dimensional code 134. In addition, the issue information may contain various information other than the document ID and the issue date and time. For example, the user ID of a user who has requested to issue an official document 130, the device ID of the document generation device 100 that has issued the official document 130, and the like may be included as part of the issue information.

The file servers 104 cause personal information to be downloaded into the user terminals 300 of a large number of users. The file servers 104 may remove the personal information downloaded into the user terminal 300 from the local storages. For example, when personal information (PX) is downloaded from the file server 104a by the user PX, a data managing unit (not illustrated) of the file server 104a may remove the personal information (PX) from the local storage after a lapse of a certain period. According to such a control method, transfer of data from the file servers 104 to the user terminal 300 is facilitated little by little. As the downloading performed by the user progresses, the data to be managed by the file servers 104 decrease. Thus, after downloading personal information from the file servers 104 into the user terminal 300, the user need not be concerned about leakage of personal information from the file servers 104.

In the description of the present embodiment, when optional data has not been input, the document generation device 100 generates an official document 130 without including the optional data. In a modification, when optional data has not been received, the checking unit 122 may provide notification of an optionality tag as an insufficiency tag. After receiving the notification, the user inputs the optional data into the user terminal 300 or the relay terminal 400. When the user has input the optional data, the document generation device 100 generates an official document 130 including the optional data. In contrast, when the user has refused to input the optional data, the document generation device 100 may generate an official document 130 without including the optional data.

Although it has been described that a second filter 330 is registered in the user badge 350, the relay terminal 400 may read a second filter 330 from the user badge 350. Specifically, the relay terminal 400 may obtain a first filter 160 and a second filter 330, and the checking unit 432 may select personal information that can be provided to the document generation device 100 from personal information present in the user badge 350 on the basis of both of the first filter 160 and the second filter 330.

In the present embodiment, it has been described that the user verifies his/her identity by accessing the document generation device 100 by using the user ID and the password. Alternatively, the document generation device 100 may verify the identity of the user by the eKYC (electronic Know Your Customer) verification.

## Claims

1. A document generation device comprising:
a receiving unit that receives data from an external terminal, the data being assigned a tag;
a checking unit that refers to a first filter indicating tags necessary for a document of a predetermined format to determine whether or not the tag assigned to the received data meets the first filter; and
a document generating unit that generates a document on the basis of data that meet the first filter.

2. The document generation device according to claim 1, wherein the checking unit removes data that do not meet the first filter from a local memory.

3. The document generation device according to claim 1, further comprising:
a notifying unit that provides notification of an insufficiency tag being a tag of missing data among a plurality of tags included in the first filter when data associated with the tag is missing, wherein
when data associated with the insufficiency tag is newly received, the document generating unit generates a document including the received data.

4. The document generation device according to claim 1, wherein
when a plurality of tags are assigned to received data, the checking unit determines whether or not any one of the tags matches a tag included in the first filter, and
when any one of the tags meets the first filter, the document generating unit generates a document including the received data.

5. The document generation device according to claim 1, further comprising:
a transmitting unit that transmits file data of the generated document to the external terminal, wherein
the document generating unit generates an official document on the basis of data provided from the external terminal.

6. The document generation device according to claim 1, further comprising:
a verification unit that checks authenticity of a document, wherein
when generating a document, the document generating unit assigns a document ID and issue date and time to the document, and registers the document ID and the issue date and time in association with each other as issue history information, and
when a verification request including a document ID and issue date and time is made by the external terminal, the verification unit notifies the external terminal that the document is authentic if the document ID and the issue date and time included in the verification request are registered in the issue history information.

7. A communication terminal connected with the document generation device according to claim 3, the communication terminal comprising:
a data storage unit that stores data and a tag in association with each other;
a filter setting unit that sets a second filter indicating tags of data that can be externally transmitted in accordance with an input from a user; and
a transmitting unit that refers to the second filter, selects data assigned a tag included in the second filter, and transmits the selected data to the document generation device, wherein
when an insufficiency tag is set again in the second filter after notification of the insufficiency tag has been provided from the document generation device, the transmitting unit transmits data associated with the insufficiency tag to the document generation device.

8. The communication terminal according to claim 7, further comprising:
an input unit that receives input of data; and
a data managing unit that manages data and tags in the data storage unit, wherein
when the data is newly input in response to the notification of the insufficiency tag from the document generation device, the transmitting unit assigns the insufficiency tag to the input data and transmits the data to the document generation device, and
the data managing unit saves the input data and the insufficiency tag in association with each other into the data storage unit.

9. The communication terminal according to claim 8, wherein when a first tag has already been assigned to data identical to the input data, the data managing unit additionally assigns the insufficiency tag as a second tag to the data.

10. A communication terminal comprising:
a receiving unit that receives data from each of a plurality of servers, each data being assigned a tag; and
a data managing unit that saves the received data in association with the corresponding tags in an internal storage, wherein
when first data assigned a first tag is received from a first server and the first data assigned a second tag is received from a second server, the data managing unit saves the first data in association with the first tag and the second tag.

11. The communication terminal according to claim 10, further comprising:
a filter setting unit that sets a second filter indicating tags of data that can be externally transmitted in accordance with an input from a user; and
a transmitting unit that refers to the second filter, selects data assigned a tag included in the second filter, and transmits the selected data to the document generation device, wherein
when either of the first tag and the second tag associated with the first data is set in the second filter, the transmitting unit sets the first data as data to be transmitted.

12. A relay terminal connected with the document generation device according to claim 3, the relay terminal comprising:
an input unit that receives input of data from a user;
a receiving unit that receives the first filter from the document generation device;
a data acquiring unit that reads data from an information carrier held by a user, the data being assigned a tag;
a checking unit that determines whether or not the tag assigned to the read data meets the first filter; and
a transmitting unit that selects data meeting the first filter from the read data, and transmits the selected data to the document generation device, wherein
when data associated with an insufficiency tag is input after notification of the insufficiency tag has been provided from the document generation device, the transmitting unit additionally transmits data associated with the insufficiency tag to the document generation device.

13. The relay terminal according to claim 12, further comprising:
a data registering unit that writes data into the information carrier, wherein
when the data associated with the insufficiency tag is input, the data registering unit writes the input data together with the insufficiency tag into the information carrier.

14. The relay terminal according to claim 12, wherein
a second filter indicating tags of data that can be externally transmitted is registered in advance in the information carrier, and
the relay terminal further comprises a filter setting unit that changes setting of the second filter of the information carrier in accordance with an input from a user.

15. A document generation system comprising a communication terminal and a document generation device, wherein
the communication terminal includes:
a data storage unit that stores data and a tag in association with each other;
a filter setting unit that sets a second filter indicating tags of data that can be externally transmitted in accordance with an input from a user; and
a transmitting unit that refers to the second filter, and when accessing the document generation device, selects data assigned a tag included in the second filter and transmits the selected data to the document generation device,
the document generation device includes:
a receiving unit that receives data from the communication terminal, the data being assigned a tag;
a checking unit that refers to a first filter indicating tags necessary for a document of a predetermined format to determine whether or not the tag assigned to the received data meets the first filter;
a document generating unit that generates a document on the basis of data that meet the first filter; and
a notifying unit that provides notification of an insufficiency tag when data associated with the tag is missing among the tags included in the first filter,
when an insufficiency tag is set again in the second filter after notification of the insufficiency tag has been provided from the document generation device, the transmitting unit of the communication terminal transmits data associated with the insufficiency tag to the document generation device, and
when data associated with the insufficiency tag is received, the document generating unit of the document generation device generates a document including the received data.

16. A program causing a computer to implement:
a function of receiving data from an external terminal, the data being assigned a tag;
a function of referring to a first filter indicating tags necessary for a document of a predetermined format to determine whether or not the tag assigned to the received data meets the first filter; and
a function of generating a document on the basis of data that meet the first filter.

17. A program causing a computer to implement:
a function of storing data and a tag in association with each other;
a function of setting a second filter indicating tags of data that can be externally transmitted in accordance with an input from a user;
a function of referring to the second filter, selecting data assigned a tag included in the second filter, and transmitting the selected data to a document generation device; and
a function of transmitting data associated with an insufficiency tag to the document generation device when the insufficiency tag is set again after notification of the insufficiency tag has been provided from the document generation device.

18. A program causing a computer to implement:
a function of receiving data from each of a plurality of servers, each data being assigned a tag;
a function of saving the received data in association with the tag in an internal storage; and
a function of saving first data in association with a first tag and a second tag when the first data assigned the first tag is received from a first server and the first data assigned the second tag is received from a second server.

19. A program causing a computer to implement:
a function of receiving input of data from a user;
a function of receiving a first filter from a document generation device;
a function of reading data from an information carrier held by a user, the data being assigned a tag;
a function of determining whether or not the tag assigned to the read data meets the first filter;
a function of selecting data that meeting the first filter from the read data, and transmitting the selected data to the document generation device; and
a function of additionally transmitting data associated with an insufficiency tag to the document generation device when the data associated with the insufficiency tag is input after notification of the insufficiency tag is provided from the document generation device.
